# EUROPÄISCHE PATENTSCHRIFT

(11) **EP 0 849 577 B1**
(45) Veröffentlichungstag und Bekanntmachung des Hinweises auf die Patenterteilung: **21.06.2000**
(21) Anmeldenummer: 96120380.9
(22) Anmeldetag: 18.12.1996
(51) Int. Cl.: G01L 7/08, G01L 9/00

(54) **Membran für einen Druckmittler**
Membrane for determining the pressure
Membrane pour déterminer la pression

(43) Veröffentlichungstag der Anmeldung: 24.06.1998
(73) Patentinhaber: WIKA ALEXANDER WIEGAND GmbH & CO., D-63911 Klingenberg (DE)
(72) Erfinder: Heller, Heinz,, 74731 Rippberg (DE); Neubeck, Kurt, Dr. Dipl.-Phys., 63897 Miltenberg (DE); Schwägerl, Robert, 63911 Klingenberg (DE)
(74) Vertreter: Tiedtke, Harro, Dipl.-Ing.

(56) Entgegenhaltungen:
- EP-A- 0 517 631
- EP-B- 0 465 573
- US-A- 4 241 325
- US-A- 4 507 972
- PATENT ABSTRACTS OF JAPAN vol. 016, no. 003 (P-1294), 7.Januar 1992 & JP 03 225243 A (TATSUTA ELECTRIC WIRE & CABLE CO LTD), 4.Oktober 1991,
- PATENT ABSTRACTS OF JAPAN vol. 009, no. 224 (P-387), 10.September 1985 & JP 60 082827 A (NITSUSHIN KEIKI KK), 11.Mai 1985,
- PATENT ABSTRACTS OF JAPAN vol. 016, no. 424 (P-1415), 7.September 1992 & JP 04 143630 A (YAMATAKE HONEYWELL CO LTD), 18.Mai 1992,
- PATENT ABSTRACTS OF JAPAN vol. 016, no. 468 (P-1429), 29.September 1992 & JP 04 168332 A (TATSUTA ELECTRIC WIRE & CABLE CO LTD), 16.Juni 1992,
- PATENT ABSTRACTS OF JAPAN vol. 096, no. 008, 30.August 1996 & JP 08 094474 A (YAMATAKE HONEYWELL CO LTD), 12.April 1996,

## Beschreibung

Die Erfindung bezieht sich auf eine Membran für einen Membran-Druckmittler gemäß dem Oberbegriff von Patentanspruch 1 sowie einen Membran-Druckmittler gemäß dem Oberbegriff von Patentanspruch 12.

Ein Membran-Druckmittler kommt dann zur Anwendung, wenn ein auf Druck ansprechendes Gerät aus bestimmten Gründen nicht direkt mit dem Meßstoff in Berührung kommen soll. Dies kann beispielsweise dann der Fall sein, wenn der Meßstoff korrosiv ist und im Falle des direkten Kontaktes mit dem Gerät dieses angreifen würde, wenn der Meßstoff hochviskos ist und dadurch die Druckweiterleitung in den Toträumen des Gerätes behindert würde oder wenn der Meßstoff zur Kristallisation oder Polymerisation neigt und dadurch Anschlußleitungen zum Gerät verstopfen würde. Diese Aufzählung von Anwendungsfällen eines Membran-Druckmittlers ist nicht abschließend und enthält lediglich einige mögliche Beispiele.

Bei dem auf Druck ansprechenden Gerät handelt es sich in der Mehrzahl der Anwendungsfälle um ein Druckmeßgerät zur Messung und Anzeige des Überdrucks des Meßstoffes. Es kann sich dabei aber auch um einen Druckmeßumformer, einen Druckschalter, einen Druckaufnehmer oder ein Differenzdruckmeßgerät oder dergleichen handeln. Wenn im folgenden von einem Druckmeßgerät gesprochen wird, so handelt es sich bei dem Druckmeßgerät um ein Beispiel für eines der möglichen auf Druck ansprechenden Geräte, das an den Membran-Druckmittler angeschlossen ist und zu dem der Druck des Meßstoffes mittels des Membran-Druckmittlers übertragen wird.

Ein bekannter Membran-Druckmittler (EP-A-0 607 482) weist einen Grundkörper mit einer flachen Ausnehmung auf, die von einer ringförmigen Fügefläche umgeben ist. An der ringförmigen Fügefläche ist eine üblicherweise kreisrunde Membran, die eine kreisringförmige Befestigungsfläche aufweist, durch Löten oder auf andere Weise fluiddicht befestigt. Auf diese Weise begrenzen die Wände der Ausnehmung und die Membran eine Flüssigkeitskammer, die im Betrieb mit einer geeigneten Füllflüssigkeit gefüllt ist. Die Flüssigkeitskammer steht über eine Leitung derart mit dem Druckmeßgerät in Verbindung, daß mittels des Druckmeßgerätes der Druck der Füllflüssigkeit in der Flüssigkeitskammer gemessen und gegebenenfalls angezeigt wird. Auf der von der Flüssigkeitskammer abgewandten Seite der Membran ist im Membran-Druckmittler ein Meßstoffraum ausgebildet, der mit dem Meßstoff gefüllt ist, jedoch von der Flüssigkeitskammer durch die Membran getrennt ist.

Der vom Meßstoffraum auf die elastische Membran wirkende Druck biegt diese durch. Wenn der Membran-Druckmittler nicht fest mit dem Druckmeßgerät verbunden wäre, würde aus der Flüssigkeitskammer ein der Durchbiegung der Membran entsprechendes Flüssigkeitsvolumen austreten. Dieses Flüssigkeitsvolumen wird üblicherweise als Arbeitsvolumen des Membran-Druckmittlers bezeichnet.

Zur Kennzeichnung der Arbeitsweise des Membran-Druckmittlers dient seine Kennlinie ΔV(p), die die Abhängigkeit des Arbeitsvolumens ΔV vom Druck p im Meßstoffraum wiedergibt. Von dieser Kennlinie wird gefordert, daß sie im Bereich des zu messenden Druckes möglichst gleiche Steigung hat, also möglichst linear verläuft, damit die systembedingten Meßfehler niedrig gehalten werden können. Wenn niedrige Drücke mit hoher Genauigkeit gemessen werden sollen, das heißt bei kleinen Nenndruckbereichen, soll die Steigung der Kennlinie in ihrem linearen Bereich vergleichsweise groß sein, damit niedrigen Drücken ein großes Arbeitsvolumen zugeordnet ist. Die Steigung der Kennlinie eines Membran-Druckmittlers in ihrem linearen Bereich wird üblicherweise als K-Faktor bezeichnet.

Der Verlauf der Kennlinie eines Membran-Druckmittlers ist im wesentlichen durch dessen Membran bestimmt. Obwohl eine ebene Membran eine Kennlinie mit bei niedrigen Drücken großer Steigung ermöglicht, eignet sie sich dennoch nicht für Membran-Druckmittler, da die Kennlinie nicht linear verläuft.

Eine Membran mit den Merkmalen des Oberbegriffs von Patentanspruch 1 ist aus dem Dokument EP-A-0 607 482 bekannt. Diese bekannte Membran weist an ihrem Rand eine ringförmige Befestigungsfläche, in ihrer Mitte eine ebene Zentralfläche und zwischen der Befestigungsfläche und der Zentalfläche eine nicht ebene, ringförmige Verbindungsfläche auf. Es sei klargestellt, daß hier die bei flachen Membranen übliche Terminologie verwendet wird, gemäß der die verschiedenen Bereiche bzw. Abschnitte einer Membran als "Fläche" bezeichnet werden, obwohl die Abschnitte bzw. Bereiche der Membran Körper mit einem Volumen ungleich null sind. Die Bezeichnung als "Fläche" ist gerechtfertigt, da die Dicke der Membran, gemessen senkrecht zur Membranebene, im Vergleich zu den Membranabmessungen in der Membranebene sehr gering ist. Bei der bekannten Membran besteht die Verbindungsfläche aus zueinander konzentrischen, ringförmigen Wellen, so daß die Verbindungsfläche im Radialschnitt ein wellenförmiges Profil hat. Diese Ausbildung als sogenannte Wellmembran ermöglicht eine hohe Linearität der Kennlinie, wobei sich jedoch gezeigt hat, daß in dem Maße, in dem durch Erhöhung der Anzahl der Wellen und ihrer Höhe die Linearität verbessert wird, zugleich die Härte der Membran zunimmt und dementsprechend der K-Faktor bzw. die Steigung der Kennlinie gering ist.

Der Erfindung liegt die Aufgabe zugrunde, die gattungsgemäße Membran derart weiterzubilden, daß sie eine Kennlinie mit hoher Linearität und zugleich hoher Steigung, also großem K-Faktor ermöglicht. Zugleich soll ein Membran-Druckmittler mit einer entsprechend verbesserten Membran geschaffen werden.

Diese Aufgabe wird erfindungsgemäß durch die Membran gemäß Patentanspruch 1 sowie den Membran-Druckmittler gemäß Patentanspruch 12 gelöst.

Bei der erfindungsgemäßen Membran ist zusätzlich zu den Merkmalen des Oberbegriffs von Patentanspruch 1 vorgesehen, daß die Verbindungsfläche gebildet ist durch zumindest eine ringförmige Stufe, die aus einer ebenen Ringfläche und einer kegelstumpf-förmigen Stufenfläche besteht, die sich radial innen an die Ringfläche anschließt, wobei die Ringflächen und die Zentralfläche in zueinander parallelen Ebenen liegen und wobei die senkrecht zur Ebene der Zentralfläche gemessene Höhe jeder Stufenfläche sehr klein ist im Verhältnis zur Breite der Stufe und im wesentlichen im Bereich von 0,2% bis 2,5% der Breite der Stufe liegt.

Die kegelstumpfförmige Ausbildung der Stufenflächen schließt nicht aus, daß der Übergang zwischen der jeweiligen Stufenfläche und den an sie angrenzenden ebenen Flächen gerundet ist und daß der Kegelstumpfform eine leichte Wölbung überlagert ist.

Bei der erfindungsgemäßen Membran besteht somit die gesamte Wirkfläche, das heißt die von der Befestigungsfläche eingeschlossene Fläche, ausschließlich aus in verschiedenen, zueinander parallelen Ebenen angeordneten ebenen Flächen sowie einer oder mehreren, die ebenen Flächen miteinander verbindenden Stufenflächen von sehr geringer Höhe. Der Durchmesser der sich an die Zentralfläche anschließenden Stufenfläche wird mit zunehmendem Abstand von der Ebene der Zentralfläche vorzugsweise größer. Entsprechendes gilt für die übrigen Stufenflächen, wenn mehr als eine Stufe vorgesehen ist.

Es hat sich gezeigt, daß die erfindungsgemäße Ausbildung der Membran eine Kennlinie mit hoher Linearität und zugleich großer Steigung im linearen Bereich, also großem K-Faktor ergibt. Die erfindungsgemäße Ausbildung ermöglicht einen K-Faktor, der beispielsweise 10 mal größer als der einer ansonsten vergleichbaren Wellmembran ist. Darüberhinaus hat die erfindungsgemäße Membran eine stabile Nullage, denn die zumindest eine Stufe bewirkt, im Gegensatz zur ebenen Membran, eine Stabilisierung.

Bei dem erfindungsgemäßen Membran-Druckmittler gemäß Patentanspruch 12 ermöglicht es die Ausbildung der Membran, daß die Flüssigkeitskammer des Membran-Druckmittlers mit kleinem Volumen ausgebildet werden kann, so daß das in der Flüssigkeitskammer eingeschlossene Übertragungsflüssigkeitsvolumen gering ist. Dies wiederum führt zu einer Verringerung der temperaturbedingten Meßfehler.

In vorteilhafter Ausbildung der erfindungsgemäßen Membran kann vorgesehen sein, daß die Anzahl der ringförmigen Stufen zumindest zwei und vorzugsweise zumindest drei beträgt. Als besonders vorteilhaft haben sich drei Stufen erwiesen.

Wenn zwei oder mehr ringförmige Stufen vorgesehen sind, ist die erfindungsgemäße Membran derart ausgebildet, daß die Abstände zwischen der Ebene der Zentralfläche und den Ebenen der Ringflächen radial nach außen zunehmend größer sind. Dabei hat es sich ferner als vorteilhaft erwiesen, daß die Höhen der Stufenflächen im wesentlichen gleich sind.

In vorteilhafter Ausbildung der Erfindung kann ferner vorgesehen sein, daß in jedem Radialschnitt der Membran die Umfangspunkte der Zentralfläche und die radial äußeren Umfangspunkte aller Ringflächen sämtlich auf einem Hüllkreis liegen. Es hat sich gezeigt, daß bei einer solchen Ausbildung der Membran die Flächeninhalte der Zentral fläche und der Ringflächen besonders günstig im Hinblick auf die angestrebte Eigenschaftskombination von hoher Linearität und hohem K-Faktor aufeinander abgestimmt sind. Dabei wird bevorzugt, daß das Verhältnis R/H im Bereich von 300 bis 1200, insbesondere im Bereich von 600 bis 1200 liegt, wobei R der Radius des Hüllkreises und H die Höhe eines Hüllkreisabschnittes ist, der durch die radial äußeren Umfangspunkte der radial äußersten Ringfläche begrenzt ist.

In vorteilhafter Ausbildung der Erfindung kann ferner vorgesehen sein, daß die Zentralfläche, die Befestigungsfläche und die vorhandenen Stufen jeweils kreisringförmig sind, so daß die Membran eine Kreismembran ist. Die Erfindung ist jedoch auch anwendbar bei nicht-kreisförmigen Membranen, beispielsweise bei ovalen Membranen und bei rechteckigen Membranen.

Weitere Merkmale und Vorteile der erfindungsgemäßen Membran ergeben sich aus der folgenden Beschreibung eines Ausführungsbeispiels derselben unter Bezugnahme auf die Zeichnung. Es zeigen:
Figur 1 eine schematische Seitenansicht, teilweise im Schnitt, eines erfindungsgemäßen Membran-Druckmittlers;
Figur 2 eine Draufsicht auf ein Ausführungsbeispiel der erfindungsgemäßen Membran; und
Figur 3 einen Radialschnitt durch die Membran gemäß Figur 2 in vergrößertem Maßstab.

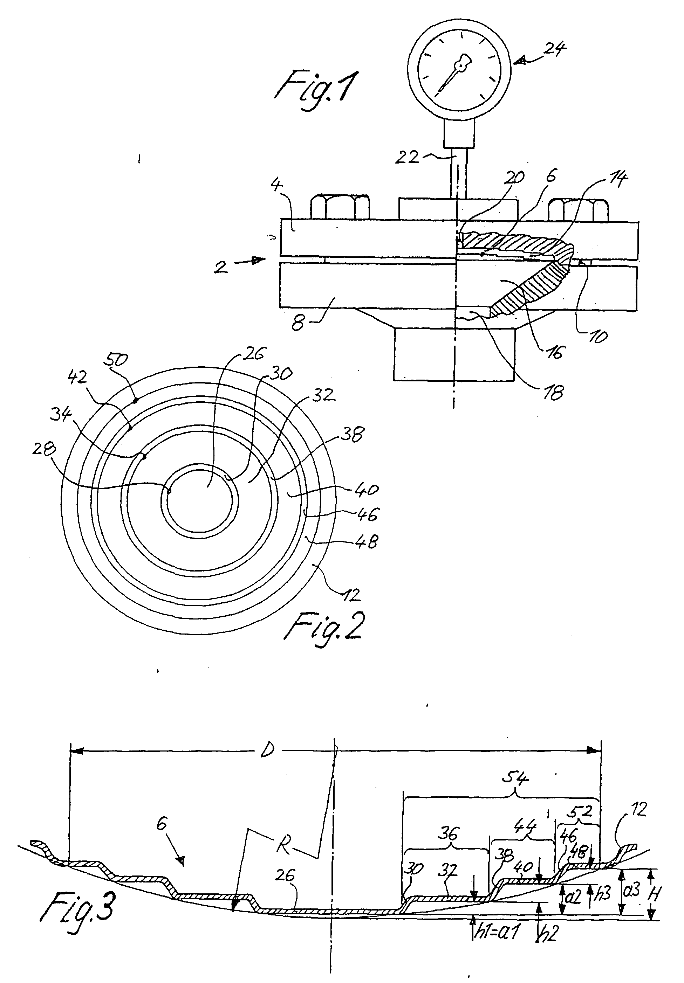

Ein schematisch in Figur 1 gezeigter Membran-Druckmittler 2 umfaßt einen im wesentlichen kreisscheibenförmigen Grundkörper 4, eine flache, gestufte Membran 6 sowie einen im wesentlichen kreisscheibenförmigen Flanschkörper 8. Beim dargestellten Ausführungsbeispiel ist die flache, gestufte Membran 6 als Kreismembran mit kreisförmigem Umriß ausgebildet.

Auf seiner in Figur 1 unten liegenden Seite weist der Grundkörper 4 eine mittig angeordnete, flache Ausnehmung auf, die von einem erhöhten, in Figur 1 nach unten vorstehenden Ringflansch-abschnitt 10 umgeben ist. Am Ringflanschabschnitt 10 ist eine kreisringförmige Befestigungsfläche 12 (siehe Figuren 2 und 3) der Membran 6 dicht angelötet. Auf diese Weise begrenzen die Wände der Ausnehmung sowie die Membran 6 eine flache Flüssigkeitskammer 14. Der Boden der flachen Ausnehmung im Grundkörper 4 bildet ein Membranbett für die Membran 6, das, wie Figur 1 zeigt, komplementär zur Membran 6 ebenfalls gestuft geformt ist.

Der Flanschkörper 8 ist mit Hilfe von Schrauben derart fest mit dem Grundkörper 4 verbunden, daß seine Oberseite an der Befestigungsfläche 12 der Membran 6 und am Ringflanschabschnitt 10 dichtend anliegt. Gegebenenfalls kann in diesem Bereich zusätzlich ein Dichtelement vorgesehen sein. Mittig im Flanschkörper 8 ist ein Meßstoffraum 16 ausgebildet, der von der Flüssigkeitskammer durch die Membran 6 getrennt ist. Durch eine Bohrung 18 im Flanschkörper 8 ist der Meßstoffraum 16 an das System anschließbar, das den Meßstoff führt, dessen Druck gemessen werden soll.

Die Flüssigkeitskammer 14 ist durch eine mittige Bohrung 20 mit einer Leitung 22 verbunden, an die wiederum ein (verkleinert dargestelltes) Druckmeßgerät 24, beispielsweise ein Federrohrmanometer, angeschlossen ist.

Im Betrieb sind die Flüssigkeitskammer 14, die Bohrung 20, die Leitung 22 und das Meßelement des Druckmeßgerätes 28 mit einer geeigneten Füllflüssigkeit gefüllt. Ferner ist im Betrieb der Meßstoffraum 16 mit dem Meßstoff gefüllt, dessen Druck gemessen werden soll. Der Druck des Meßstoffs im Meßstoffraum 16 wird mittels der Membran 16 zur Füllflüssigkeit in der Flüssigkeitskammer 14 übertragen, so daß das Druckmeßgerät 24, das den Druck der Füllflüssigkeit mißt und anzeigt, dadurch zugleich den Druck des Meßstoffs im Meßstoffraum 16 mißt und anzeigt.

Die Membran 6 des vorstehend beschriebenen Membran-Druckmittlers 2 wird im folgenden anhand der Figuren 2 und 3 näher erläutert. Dabei zeigt Figur 2 eine Ansicht der Membran 6 von unten in Figur 1, während Figur 3 einen Schnitt durch die Membran 6 in einer Radialebene derselben zeigt. In Figur 3 ist die Membran 6 in zur Einbaulage gemäß Figur 1 umgekehrter Lage dargestellt. Dementsprechend ist die in Figur 3 oben liegende Seite der Membran dem Meßstoffraum 16 zugewandt und ist die in Figur 3 unten liegende Seite der Membran der Flüssigkeitskammer 14 zugewandt, wenn die Membran 6 im Membran-Druckmittler montiert ist.

Figur 3 zeigt die Membran stark überhöht: Sämtliche vertikalen Abmessungen sind im Vergleich zu den waagerechten Abmessungen der Membran 6 wesentlich größer dargestellt, als es der Realität entspricht. Dies gilt auch für die Dicke bzw. Wandstärke der Membran 6. Figur 3 ist eine vergrößerte, in Vertikalrichtung überhöhte Darstellung einer Membran mit einer Dicke von 0,1 mm und einem Durchmesser D der von der Befestigungsfläche 12 begrenzten druckbeaufschlagten Wirkfläche von 82 mm.

Die Membran 6 besteht üblicherweise aus einem an den Einsatzzweck des Membran-Druckmittlers 2 angepaßten Sondermaterial, beispielsweise Titan, Hastelloy (Nickel-Molybdän-Eisen-Legierung mit über 55% Nickel), Monel (Nickel-Kupfer-Legierung mit 30 bis 40% Kupfer), Inconel (warmfeste Nikkelbasislegierung) oder Tantal. Die in den Figuren 2 und 3 dargestellte Form erhält die Membran durch Prägen eines ebenen, kreisförmigen Rohlings. Das Formgebungsverfahren ist nicht wesentlich für die Erfindung und wird daher hier nicht näher erläutert.

Die Membran 6 ist rotationssymmetrisch zu ihrer strichpunktiert in Figur 3 gezeigten Mittellinie ausgebildet.

Wie in den Figuren 2 und 3 dargestellt ist, umfaßt die Membran 6 eine ebene, kreisförmige Zentralfläche 26, deren Umfangspunkte auf einem Kreis 28 liegen. Radial nach außen schließt sich an die Zentralfläche 26 eine erste kegelstumpfförmige Stufenfläche 30 an, an die sich wiederum eine erste ebene Ringfläche 32 radial nach außen anschließt, deren radial äußere Umfangspunkte auf einem Kreis 34 liegen. Die erste Stufenfläche 30 und die erste Ringfläche 32 bilden gemeinsam eine erste kreisringförmige Stufe 36. Radial nach außen schließt sich an die erste Ringfläche 32 eine zweite kegelstumpfförmige Stufenfläche 38 an, die radial nach außen in eine zweite ebene Ringfläche 40 übergeht, deren radial äußere Umfangspunkte auf einem Kreis 42 liegen. Die zweite Stufenfläche 38 und die zweite Ringfläche 40 bilden gemeinsam eine zweite Stufe 44. Radial außen an die zweite Ringfläche 40 schließt sich ein dritte kegelstumpfförmige Stufenfläche 46 an, die in eine dritte ebene Ringfläche 48 übergeht, deren radial äußere Umfangspunkte auf einem Kreis 50 liegen. Die dritte Stufenfläche 46 und die dritte Ringfläche 48 bilden gemeinsam eine dritte Stufe 52. An die dritte Ringfläche 48 schließt sich die Befestigungsfläche 12 an, die beim dargestellten Ausführungsbeispiel eine Randprägung mit einem S-Profil hat, jedoch auch eben ausgebildet sein könnte.

Die Übergänge zwischen den kegelstumpfförmigen Stufenflächen 30, 38 und 46 und den jeweils an sie angrenzenden ebenen Flächen sind gerundet. Der Durchmesser jeder der kegelstumpfförmigen Stufenflächen 30, 38 und 46 nimmt mit zunehmendem Abstand von der Ebene der Zentralfläche 26 zu, so daß jede der kegelstumpfförmigen Flächen ihren größten Durchmesser am Übergang zu derjenigen Ringfläche hat, mit der sie eine der Stufen bildet.

Aufgrund der vorstehend beschriebenen Ausbildung der Membran 6 ist der Abstand al zwischen der Ebene der Zentralfäche 26 und der Ebene der ersten Ringfläche 32 kleiner als der Abstand a2 zwischen der Ebene der Zentralfläche 26 und der Ebene der zweiten Ringfläche 40, wobei der Abstand a2 wiederum kleiner ist als der Abstand a3 zwischen der Ebene der Zentralfläche 26 und der Ebene der dritten Ringfläche 48. Dies bedeutet, daß die Abstände zwischen der Ebene der Zentralfläche 26 und den Ebenen der Ringflächen 32, 40 und 48 radial nach außen zunehmend größer sind.

Die drei Stufen 36, 44 und 52 bilden gemeinsam eine kreisringförmige Verbindungsfläche 54, die die Zentralfläche 26 mit der kreisringförmigen Befestigungsfläche 12 verbindet. Die druckbeaufschlagte Fläche der Membran 6, das heißt ihre Wirkfläche setzt sich zusammen aus der Zentralfläche 26 und den drei Stufen 36, 44 und 52 und ist somit radial außen durch den Kreis 50 begrenzt, der den Durchmesser D hat (siehe Figur 3).

Die erste Stufenfläche 30 hat, senkrecht zur Ebene der Zentralfäche 26 gemessen, eine Höhe hl, die gleich dem Abstand al ist. Die zweite Stufenfläche 38 hat eine Höhe h2, und die dritte Stufenfläche 46 hat eine Höhe h3. Diese Höhen sind sämtlich sehr klein im Verhältnis zur Breite der jeweiligen Stufe 36 bzw. 44 bzw. 52, wobei die Breite einer Stufe die Differenz zwischen den Radien der die jeweilige Stufe radial innen und radial außen begrenzenden Kreise ist. Beim dargestellten Ausführungsbeispiel sind die Höhen h1, h2 und h3 einander gleich. Die Höhe h1 beträgt 1,43% der Breite der ersten Stufe 36, die Höhe h2 beträgt 1,5% der Breite der zweiten Stufe 44, und die Höhe h3 beträgt 1,94% der Breite der dritten Stufe 52.

In jedem Radialschnitt der Membran 6 gemäß dem dargestellten Ausführungsbeispiel und somit auch in dem in Figur 3 gezeigten Radialschnitt liegen die Umfangspunkte der Zentralfläche 26 und die radial äußeren Umfangspunkte aller Ringflächen 32, 40 und 48 sämtlich auf einem gemeinsamen Hüllkreis mit dem Radius R. Dabei ist der Radius R sehr groß im Verhältnis zu der Höhe desjenigen Hüllkreisabschnitts, der durch die radial äußeren Umfangspunkte der radial äußersten Ringfläche, also der dritten Ringfläche 48, begrenzt ist. Das Verhältnis R/H beträgt beim dargestellten Ausführungsbeispiel 1000 und liegt in dem für das Verhältnis R/H bevorzugten Bereich von 300 bis 1200. Da die Membran 6 gemäß dem dargestellten Ausführungsbeispiel rotationssymmetrisch zu ihrer Mittellinie ausgebildet ist, haben die Hüllkreise in jedem Radialschnitt denselben Radius R. Dementsprechend liegen der die Zentralfläche 26 begrenzende Kreis 28 und die die Ringflächen radial außen begrenzenden Kreise 34, 42 und 50 sämtlich auf einer Kugel mit dem Radius R der in allen Radialschnitten gleichen Hüllkreise.

Die auf die Ebene der Zentralfläche 26 projizierten Flächen der Membran haben in der Projektionsebene, also in der Ebene der Zentralfläche, bei dem beschriebenen Ausführungsbeispiel folgende prozentuale Flächeninhalte. Der Flächeninhalt der Zentralfläche 26 beträgt 10% des Flächeninhalts der Wirkfläche der Membran. Der Flächeninhalt der ersten Stufenfläche 30 beträgt 5% des Flächeninhalts der Wirkfläche. Der Flächeninhalt der ersten Ringfläche 32 beträgt 13% des Flächeninhalts der Wirkfläche. Der Flächeninhalt der zweiten Stufenfläche 38 beträgt 7% des Flächeninhalts der Wirkfläche. Der Flächeninhalt der zweiten Ringfläche 40 beträgt 17% des Flächeninhalts der Wirkfläche. Der Flächeninhalt der dritten Stufenfläche 46 beträgt 10% des Flächeninhalts der Wirkfläche, und der Flächeninhalt der dritten Ringfläche 48 beträgt 22% des Flächeninhalts der Wirkfläche. Der Flächeninhalt der Befestigungsfläche 12 beträgt 16% des Flächeninhalts der Wirkfläche.

Es versteht sich, daß die Erfindung nicht auf die konkreten Einzelheiten des vorstehend anhand der Figuren 2 und 3 beschriebenen Ausführungsbeispiels beschränkt ist.

## Patentansprüche

1. Membran für einen Druckmittler, mit einer ebenen Zentralfläche (26), einer ringförmigen Befestigungsfläche (12), die konzentrisch zur Zentralfläche (26) angeordnet ist und den radial äußeren Rand der Membran (6) bildet, und einer ringförmigen Verbindungsfläche (54), die die Zentralfläche (26) mit der Randfläche (12) verbindet und insgesamt nicht eben ist, dadurch gekennzeichnet, daß die Verbindungsfläche (54) gebildet ist durch zumindest eine ringförmige Stufe (36, 44, 52), die aus einer ebenen Ringfläche (32, 40, 48) und einer kegelstumpfförmigen Stufenfläche (30, 38, 46) besteht, die sich radial innen an die Ringfläche (32, 40, 48) anschließt, wobei die Ringflächen (32, 40, 48) und die Zentralfläche (26) in zueinander parallelen Ebenen liegen und wobei die senkrecht zur Ebene der Zentralfläche (26) gemessene Höhe (h1, h2, h3) jeder Stufenfläche (30, 38, 46) sehr klein ist im Verhältnis zur Breite der Stufe (36, 44, 52) und im wesentlichen im Bereich von 0,2 % bis 2,5 % der Breite der Stufe liegt.

2. Membran nach Anspruch 1, dadurch gekennzeichnet, daß die Anzahl der ringförmigen Stufen (36, 44, 52) zumindest zwei beträgt.

3. Membran nach Anspruch 1, dadurch gekennzeichnet, daß die Anzahl der ringförmigen Stufen (36, 44, 52) zumindest drei beträgt.

4. Membran nach Anspruch 2 oder 3, dadurch gekennzeichnet, daß die Abstände (al, a2, a3) zwischen der Ebene der Zentralfläche (26) und den Ebenen der Ringflächen (32, 40, 48) radial nach außen zunehmend größer sind.

5. Membran nach Anspruch 4, dadurch gekennzeichnet, daß die Höhen (hl, h2, h3) der Stufenflächen (30, 38, 46) im wesentlichen gleich sind.

6. Membran nach einem der Ansprüche 2 bis 5, dadurch gekennzeichnet, daß in jedem Radialschnitt der Membran (6) die Umfangspunkte der Zentralfläche (26) und die radial äußeren Umfangspunkte aller Ringflächen (32, 40, 48) sämtlich auf einem Hüllkreis liegen.

7. Membran nach Anspruch 6, dadurch gekennzeichnet, daß das Verhältnis R/H im Bereich von 300 bis 1200 liegt, wobei R der Radius des Hüllkreises und H die Höhe eines Hüllkreisabschnitts ist, der durch die radial äußeren Umfangspunkte der radial äußersten Ringfläche (48) begrenzt ist.

8. Membran nach Anspruch 7, dadurch gekennzeichnet, daß das Verhältnis R/H im Bereich von 600 bis 1000 liegt.

9. Membran nach einem der Ansprüche 1 bis 8, dadurch gekennzeichnet, daß die Zentralfläche (26), die Befestigungsfläche (12) und die vorhandenen Stufen (36, 44, 52) jeweils kreisringförmig sind.

10. Membran nach einem der Ansprüche 1 bis 9, dadurch gekennzeichnet, daß die Befestigungsfläche (12) eben ist.

11. Membran nach einem der Ansprüche 1 bis 9, dadurch gekennzeichnet, daß die Befestigungsfläche (12) eine Randprägung aufweist.

12. Membran-Druckmittler mit einem Grundkörper (4), einer im Grundkörper ausgebildeten Ausnehmung, einer flachen Membran (6), die fluiddicht am Grundkörper befestigt ist und die zusammen mit den Wänden der Ausnehmung eine Flüssigkeitskammer (14) begrenzt, die im Betrieb mit einer Füllflüssigkeit gefüllt ist, und einem Meßstoffraum (16), der auf der von der Flüssigkeitskammer (14) abgewandten Seite der Membran (6) angeordnet ist und im Betrieb mit einem Meßstoff gefüllt ist, dadurch gekennzeichnet, daß die Membran (6) nach einem der Ansprüche 1 bis 11 ausgebildet ist.

## Claims

1. Membrane for a pressure transmitter comprising a plane central surface (26), an annular mounting surface (12), which is arranged concentrically to the central surface (26) and forms the radially outer edge of the membrane (6), and an annular connecting surface (54), which joins the central surface (26) to the edge surface (12) and which is in all not level, **characterised in that** the connecting surface (54) is formed by at least one annular step (36, 44, 52), which is composed of an even annular surface (32, 40, 48) and a truncated step surface (30, 38, 46) which is radially inwardly adjoining the annular surface (32, 40, 48), and the annular surfaces (32, 40, 48) and the central surface (26) lie in planes which are parallel relative to each other and the height (h1, h2, h3) measured perpendicularly to the plane of the central surface (26) of each step surface (30, 38, 46) is very small in relation to the width of the step (36, 44, 52) and lies essentially in the range of between 0.2% and 2.5% of the width of the step.

2. Membrane according to Claim 1, **characterised in that** the number of annular steps (36, 44, 52) is at least two.

3. Membrane according to Claim 1, **characterised in that** the number of the annular steps (36, 44, 52) is at least three.

4. Membrane according to Claim 2 or 3, **characterised in that** the distances (a1, a2, a3) between the plane of the central surface (26) and the planes of the annular surfaces (32, 40, 48) increase in a radially outward direction.

5. Membrane according to Claim 4, **characterised in that** the heights (h1, h2, h3) of the step surfaces (30, 38, 46) are essentially equal.

6. Membrane according to one of Claims 2 to 5, **characterised in** **that** in each radial section of the membrane (6) all the peripheral points of the central surface (26) and the radially outer peripheral points of all annular surfaces (32, 40, 48) lie on a sleeve circle.

7. Membrane according to Claim 6, **characterised in that** the ratio R/H lies in the range between 300 and 1,200, where R is the radius of the sleeve circle and H the height of a sleeve circle section which is defined by the radially outer peripheral points of the radially outermost annular surface (48).

8. Membrane according to Claim 7, **characterised in that** the ratio R/H lies in the range between 600 and 1,000.

9. Membrane according to one of Claims 1 to 8, **characterised in that** the central surface (26), the mounting surface (12) and the present steps (36, 44, 52) are each of circular shape.

10. Membrane according to one of Claims 1 to 9, **characterised in that** the mounting surface (12) is even.

11. Membrane according to one of Claims 1 to 9, **characterised in that** the mounting surfaces (12) are edge embossed.

12. Membrane for a pressure transmitter comprising a base body (4), a recess established in the base body, a flat membrane (6), which is mounted in a fluidproof manner to the base body and which together with the walls of the recess defines a fluid chamber (14) which is when operational filled with a filler liquid, and a measuring substance chamber (16), which is arranged on the side of the membrane (6) facing away from the fluid chamber (14) and when operational filled with a measuring substance, **characterised in that** the membrane (6) is designed according to one of Claims 1 to 11.

## Revendications

1. Membrane pour un transmetteur de pression, présentant une surface centrale (26) plane, une surface de fixation (12) annulaire qui est disposée concentriquement à la surface centrale (26) et qui forme le bord radialement extérieur de la membrane (6), ainsi qu'une surface de liaison (54) annulaire qui relie la surface centrale (26) à la surface de bordure (12) et qui dans l'ensemble n'est pas plane, caractérisée en ce que la surface de liaison (54) est formée par au moins un gradin (36, 44, 52) annulaire qui est constitué d'une surface annulaire (32, 40, 48) plane et d'une surface (30, 38, 46) tronconique, qui se raccorde radialement à l'intérieur à la surface annulaire (32, 40, 48), les surfaces annulaires (32, 40, 48) et la surface centrale (26) se situant dans des plans parallèles entre eux, et la hauteur (hl, h2, h3) mesurée perpendiculairement au plan de la surface centrale (26), de chaque surface (30, 38, 46) du gradin étant très petite par rapport à la largeur du gradin (36, 44, 52) et étant sensiblement comprise entre 0,2 % et 2,5 % de la largeur du gradin.

2. Membrane selon la revendication 1, caractérisée en ce que le nombre de gradins (36, 44, 52) annulaires est au moins égal à deux.

3. Membrane selon la revendication 1, caractérisée en ce que le nombre de gradins (36, 44, 52) annulaires est au moins égal à trois.

4. Membrane selon la revendication 2 ou 3, caractérisée en ce que les distances (al, a2, a3) entre le plan de la surface centrale (26) et les plans des surfaces annulaires (32, 40, 48) augmentent radialement vers l'extérieur.

5. Membrane selon la revendication 4, caractérisée en ce que les hauteurs (hl, h2, h3) des surfaces (3°, 38, 46) du gradin sont sensiblement égales.

6. Membrane selon l'une des revendications 2 à 5, caractérisée en ce que dans chaque coupe radiale de la membrane (6), tous les points périphériques de la surface centrale (26) et les points périphériques radialement extérieurs de toutes les surfaces annulaires (32, 40, 48) se situent sur un cercle enveloppant.

7. Membrane selon la revendication 6, caractérisée en ce que le rapport (R/H) se situe entre 300 et 1 200, R étant le rayon du cercle enveloppant et H la hauteur d'un segment de cercle enveloppant qui est limité par les points périphériques radialement extérieurs de la surface annulaire (48) radialement la plus extérieure.

8. Membrane selon la revendication 7, caractérisée en ce que le rapport (R/H) se situe entre 600 et 1 000.

9. Membrane selon l'une des revendications 1 à 8, caractérisée en ce que la surface centrale (26), la surface de fixation (12) et les gradins (36, 44, 52) existants sont chacun en forme d'anneau de cercle.

10. Membrane selon l'une des revendications 1 à 9, caractérisée en ce que la surface de fixation (12) est plane.

11. Membrane selon l'une des revendications 1 à 9, caractérisée en ce que la surface de fixation (12) présente une empreinte en bordure.

12. Transmetteur de pression à membrane comportant un corps de base (4), un évidement formé dans le corps de base, une membrane (6) plate qui est fixée au corps de base de manière étanche au fluide et qui, avec les parois de l'évidement, délimite une chambre de liquide (14) qui en service est remplie d'un liquide de remplissage, et comportant une chambre de substance de mesure (16) qui est disposée sur le côté de la membrane (6) opposé à la chambre de liquide (14) et qui, en service, est remplie d'une substance à mesurer, caractérisé en ce que la membrane (6) est conformée suivant l'une des revendications 1 à 11.
